(19) Europäisches Patentamt
European Patent Office
Office européen des brevets

(11) **EP 0 179 283 B1**

(12) **EUROPEAN PATENT SPECIFICATION**

(45) Date of publication and mention
of the grant of the patent:
**03.01.1996 Bulletin 1996/01**

(51) Int Cl.⁶: **H04Q 7/38, H04B 7/08**

(21) Application number: **85111981.8**

(22) Date of filing: **18.10.1983**

(54) **Portable radio for a zoned data communications system communicating message signals between portable radios and a host computer**

Tragbares Funkgerät für ein in Zonen geteiltes Datenübertragungssystem zur Nachrichtensignalübermittlung zwischen tragbaren Funkgeräten und Hilfsrechner

Radio portable pour système de communication de données réparti par zones échangeant des messages entre radios portables et calculateur hôte

(84) Designated Contracting States:
**CH DE FR GB LI NL SE**

(30) Priority: **12.11.1982 US 441327**

(43) Date of publication of application:
**30.04.1986 Bulletin 1986/18**

(62) Application number of earlier application in
accordance with Art. 76 EPC: **83903706.6**

(73) Proprietor: **MOTOROLA, INC.**
**Schaumburg, IL 60196 (US)**

(72) Inventor: **Freeburg, Thomas Arthur**
**Arlington Heights, Illinois 60004 (US)**

(74) Representative: **Hudson, Peter David et al**
**Basingstoke, Hampshire RG21 1PL (GB)**

(56) References cited:
**WO-A-84/02043** **US-A- 3 357 019**
**US-A- 4 229 822** **US-A- 4 354 252**

• **PROCEEDINGS OF 30th ANNUAL CONFERENCE OF THE IEEE VEHICULAR TECHNOLOGY SOCIETY, INTERNATIONAL CONFERENCE ON TRANSPORTATION ELECTRONICS, 15th-17th September 1980, Dearborn, Michigan, pages 1-5, IEEE Vehicular Technology Society; R.E. FISHER: "Portable telephones for 850 MHz cellular systems"**
• **ELECTRONICS INTERNATIONAL, vol. 56, no. 17, 25th August 1983, pages 142-145, New York, US; J. KREBS: "Portable computer and host talk over radio-frequency link"**
• **NEC RESEARCH AND DEVELOPMENT, no. 50, July 1978, pages 62-68, Tokyo, JP; T. MIYAMOTO et al.: "Radio terminal system"**

**Description**

BACKGROUND OF THE INVENTION

The present invention relates generally to radio communications systems, and more particularly to radios for use in such data communications systems for dynamically , selecting one of a plurality of radio frequency signal transmitters for transmitting message signals from a primary station to remote stations of the system.

In radio communications systems covering large geographical areas, the location of remote stations such as portable or mobile radios must be known with reasonable accuracy in order to provide good quality communications. In such communications systems, the geographical area may be divided up into a number of zones or cells, each of which is covered by at least one radio transmitter and radio receiver associated with a primary station. For establishing communications between the primary station and a remote station, knowledge of the remote station's location is necessary in order that the radio transmitter covering the zone in which the remote station is located may be selected at the primary station.

The problem of selecting the radio transmitter which covers the zone in which a remote station is located has been solved with a limited degree of success in several different ways. According to on technique, the radio receiver receiving the strongest RF signal from a selected remote station is used to define the location of that remote station. The primary station simply selects the radio transmitter covering the geographical area of the receiver receiving the strongest signal from the selected remote station.

According to another technique, each remote station is assigned to a specific geographical area. In other words, a remote station is permanently associated with the zone or zones covered by a specific radio transmitter. This technique works reasonably well as long as the remote station remains within the geographical area covered by the assigned radio transmitter. However, this technique is inadequate for communications systems where each remote station is free to move about throughout a very large geographical area, making it impossible to limit a remote station to the coverage area of a single radio transmitter.

According to yet another technique that is utilized in cellular radiotelephone systems, the remote station determines the zone in which it is located by selecting the radio transmitter having the largest signal strength. This technique required that each radio transmitter have a different frequency, and that communications from the primary station to a selected remote station be sent in all zones in order for the remote station to make its choice known on demand. This technique is adequate for radio telephone systems where the average message length is much longer than the minimum message length, but is inadequate for data communications sytems where the average message length is not much larger than the minimum message length. Therefore, in order to provide good quality communications in data communications systems, it is necessary to have a reasonably accurate determination of the location of each remote station in the system.

From US Patent No. 4,144,412 there is known a method for use in a primary station of a communications system for communicating message signals via a communications medium between the primary station and a plurality of remote stations located anywhere in a geographical area that is divided into a plurality of zones, said primary station including control means and a plurality of receiving means for receiving message signals modulated on a carrier signal, each zone covered by at least one receiving means, and said remote stations including transmitting means for transmitting message signals modulated on the carrier signal for determining the zone in which each remote station is located.

OBJECTS AND SUMMARY OF THE INVENTION

It is an object of the present invention to provide an improved method and apparatus for dynamically selecting one of a plurality of radio frequency signal transmitters for transmitting message signals from a primary station to a selected remote station of a data communications system.

It is another object of the present invention to provide an improved method and apparatus for dynamically determining the location of remote stations of a data communications system providing communications between a primary station and a plurality of remote stations located throughout a large geographical area.

It is yet a further object of the present invention to provide an improved method and apparatus for simultaneously transmitting message signals to two or more remote stations located in different zones of a data communications system.

In accordance with a first aspect of the present invention the known method is characterised by the steps of:

a) measuring the signal strength of the carrier signal received by each primary station receiving means during each transmission from each remote station;

b) computing an adjusted signal strength for each zone by adjusting the measured signal strength for each primary station receiving means by corresponding predetermined factors associated with the zone and combining the adjusted signal strengths for each remote station; and

c) dynamically selecting for each remote station the zone having the largest adjusted signal strength for the last transmission from that remote station.

In accordance with a second aspect of the present invention there is provided control means for a primary station of a communications system for communicating message signals via a communications medium between the primary station and a plurality of remote stations located anywhere in a geographical area that is divided into a plurality of zones, said primary station further including a plurality of transmitting means for transmitting message signals modulated on a first carrier signal and a plurality of receiving means for receiving message signals modulated on a second carrier signal, each zone covered by at least one of the transmitting means and covered by at least one of the receiving means, and said remote stations including transmitting means for transmitting message signals modulated on the second carrier signal and receiving means for receiving message signals modulated on the first carrier signal; said control means characterised by:

means for measuring the signal strength of the carrier signal received by each primary station receiving means during each transmission from each remote station;

means for computing an adjusted signal strength for each zone by adjusting the measured signal strength for each primary station receiving means by corresponding predetermined factors associated with the zone and combining the adjusted signal strengths for each remote station; and

means for dynamically selecting for each remote station the zone which had the largest adjusted signal strength for the last transmission from that remote station.

BRIEF DESCRIPTION OF THE DRAWINGS

Figure 1 is a block diagram of a data communications system that may advantageously utilize the present invention.
Figure 2 is a diagram of a geographical area that is divided up into a number of zones.
Figure 3 is a block diagram of the circuitry in the receivers in Figure 1.
Figure 4 is a block diagram of the circuitry in the channel communications modules in Figure 1.
Figure 5 is a block diagram of the circuitry in the general communications controller in Figure 1.
Figure 6 is a flow chart used by the general communications controller for processing signal strength data received from the channel communications modules in Figure 1.
Figure 7 is a flow chart used by the general communications controller for selecting a transmitter on which data signals are transmitted to a selected portable radio in Figure 1.
Figure 8 is a flow chart used by the channel communications module for measuring the signal strengths of signals transmitted by the portable radios in Figure 1.
Figure 9 is a block diagram of the circuitry in the portable radios in Figure 1.

DETAILED DESCRIPTION OF THE PREFERRED EMBODIMENTS

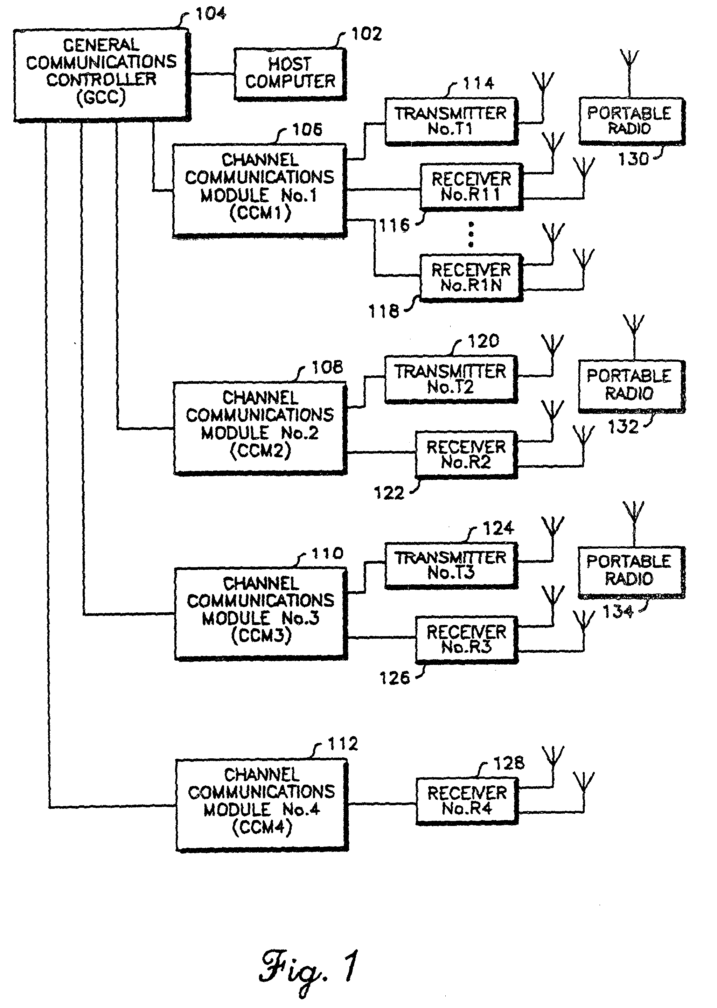

In Figure 1, there is illustrated a data communications system that communicates message signals between a primary station, such as a general communications controller (GCC) 104, by way of a communications medium, such as a radio frequency (RF) communications channel, to a plurality of remote stations, such as mobile or portable radios 130, 132 and 134. Although described in the context of a data only communications system, both data signals and analog signals such as voice signals can be communicated over the RF communications channel to the portable radios 130, 132 and 134. The data communications system covers a large geographical area which is divided into a plurality of cells or zones. Located throughout the geographical area are a number of channel communications modules (CCM) 106, 108, 110 and 112, which are each coupled to and control a number of RF signal transmitters 114, 120, and 124 and RF signal receivers 116, 118, 122, 126 and 128.

The RF communications channel is preferably comprised of first and second carrier signals which may 5 be modulated with the message signals. Transmitters 114, 120 and 124 may be operative on the first carrier signal, while receivers 116, 118, 122, 126 and 128 may be operative on the second carrier signal of the radio communications channel. Each zone of the radio communications system is covered by an assigned one of the transmitters 114, 120 and 124 and by at least one of the receivers 116, 118, 122, 126 and 128. Transmitters 114, 120 and 124 and receivers 116, 118, 122, 126 and 128 may be any suitable commercially available transmitters and receivers such as those described in Motorola Instruction Manual 68P81013E65. CCM's 106, 108, 110 and 112 may be co-located with their corresponding transmitters and receivers or may be remotely located and coupled to their corresponding transmitters 20 and receivers by means of a suitable remote control system, such as, for example, the tone remote control system described in U.S.

Patent Number 3,577,080.

Portable radios 130, 132 and 134 may be either commercially available mobile radios of the type shown and described in Motorola Instruction Manual No. 68P81039E25 or commercially available hand-held portable radios of the type shown and described in U.S. patent numbers 3,906,166 and 3,962,553. Portable radios 130, 132 and 134 each include a transmitter operable on the second carrier signal and a receiver operable on the first carrier signal. The transmitter and receiver in portable radios 130, 132 and 134 may be any suitable commercially available conventional transmitter and receiver, such as, for example, the transmitter and receiver described in Motorola instruction manual no's. 68P81039E25 and 68P81014C65. These and the other Motorola Instruction Manuals referenced herein are available from the Service Publications Department of Motorola, Inc., 1301 East Algonquin Road, Schaumburg, Illinois or from Motorola C & E Parts, 1313 East Algonquin Road, Schaumburg, Illinois.

GCC 104 of the data communications system in Figure 1 may be coupled to a host computer 102 which may control a number of GCC's 104 that are located in different geographical areas, such as, for example, different cities. Thus, host computer 102 may gather data from, and dispatch data to, portable radios located in several different cities. GCC 104 may be coupled to host computer 102 and CCM's 106, 108, 110, and 112 by means of commercially available modems and associated dedicated telephone lines.

GCC 104 in Figure 1 transmits message signals to and receives message signals from portable radios 130, 132 and 134. The message signals may include coded data packets which each may contain a binary preamble, a predetermined synchronization word and an information word containing a command, status or data. The format of the data packets may be any of a number of existing data formats, such as, for example, those described in U.S. patent numbers 3,906,445, 4,156,867 and 4,354,252.

Message signals are routed by GCC 104 to a selected CCM 106, 108, 110 and 112 for transmission by its corresponding transmitter. Since the message signals are not transmitted on all transmitters simultaneously, as in simulcast systems of the type described in U.S. Patent Number 4,188,522, it is necessary that GCC 104 have a reasonably accurate determination of the location of each portable radio 130, 132 and 134 so that GCC 104 may select the transmitter 114, 120 or 124 which covers the zone in which a particular portable radio is located. The improved method and apparatus of the present invention enable GCC 104 to dynamically select the transmitter 114, 120 or 124 for transmitting a message signal to a selected portable radio 130, 132 or 134.

According to another important feature of the present invention, two or more of the transmitters 114, 120 or 124 can be operated simultaneously for communicating with different portable radios located in different zones provided that transmissions from the two transmitters do not interfere with reception in the particular zones where the two portable radios are located. As a result, data throughput of the data communications system illustrated in Figure 1 can be significantly increased by re-use of the RF communications channel. In other words, by taking advantage of re-use, a single RF communications channel can serve thousands of portable radios in a geographical area covering several states and their major cities.

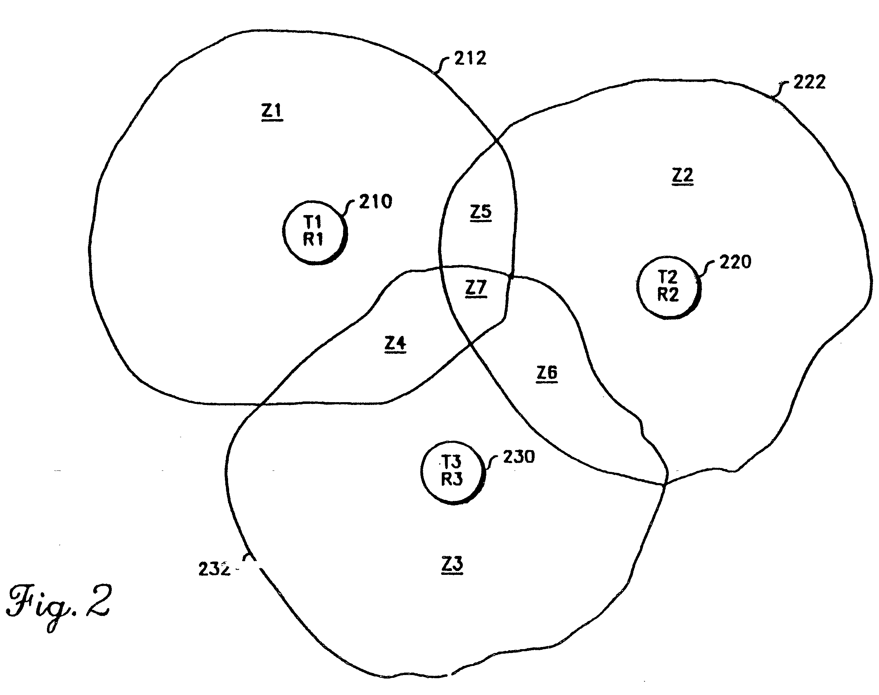

Referring to Figure 2, there is illustrated a geographical area of a data communications system that is divided into seven zones, Z1-Z7, and that includes three CCM's 210, 220 and 230 and corresponding transmitters and receivers. Transmitter T1 of CCM 210 has a coverage area within circle 212, transmitter T2 of CCM 220 within circle 222, and transmitter T3 of CCM 230 within circle 232. Each time a portable radio transmits, signal strength readings are taken by receivers R1, R2 and R3. These readings can be expressed by the following signal strength SSI matrix:

$$[SSI] = [SSI1 \; SSI2 \; SSI3].$$

According to the present invention, the signal strength readings taken by receivers R1, R2 and R3 can be used to compute an adjusted signal strength for each zone Z1-Z7 by adjusting the measured signal strength for each receiver R1, R2 and R3 by corresponding predetermined factors associated with the particular zone and then combining the adjusted signal strengths. The predetermined factors used to compute the adjusted signal Strength depend on a number of factors such as the terrain, the height and gain of the antennas, and the sensitivity of the receivers. In other words, the predetermined factors associated with each zone are emperically determined and depend upon the characteristics of the equipment and terrain in each data communications system. The predetermined factors can be arranged in a zone selection ZSEL matrix, such as, or example, the exemplary ZSEL matrix hereinbelow:

$$[ZSEL] = \begin{bmatrix} 15.5 & 0 & 0 & 10.7 & 10.4 & 0 & 7.7 \\ 0 & 15.3 & 0 & 0 & 9.8 & 10.2 & 7.5 \\ 0 & 0 & 15.7 & 10 & 0 & 11 & 7.4 \end{bmatrix}$$

The adjusted signal strength ZADJ matrix for each of the zones Z1-Z7 is than computed according to the following matrix formula:

$$[ZADJ] = [SSI] \; X \; [ZSEL]; \; or$$
$$[ZADJ] = [Z1ADJ \; Z2ADJ \; Z3ADJ \; Z4ADJ \; Z5ADJ \; Z6ADJ \; Z7ADJ]$$

Then, using the ZADJ matrix, GCC 104 can select the zone which has the largest adjusted signal strength for a particular transmission from a portable radio. The selected zone can be stored together with other data in a location of the memory of GCC 104 associated with that portable radio.

Whenever transmitting a message signal to that particular portable radio, GCC 104 will first transmit the message signal on the carrier signal of the transmitter that covers the zone which had the largest adjusted signal strength for the last transmission from that portable radio. Both that zone and the transmitter covering it are stored in the memory of GCC 104. If the portable radio does not acknowledge the transmission of the message signal from GCC 104, GCC 104 may attempt one or more retransmissions of the message signal by means of that selected transmittter. If the retransmissions likewise are not acknowledged by the portable radio, GCC 104 may then transmit the message signal via the transmitter covering the zone which had the second largest adjusted signal strength for the last transmission from that portable radio. Again, if the portable radio does not acknowledge the transmission from GCC 104, GCC 104 may resend the message signal one or more times by means of that selected transmitter. If GCC 104 does not reach the selected portable radio by means of these two transmitters, GCC 104 may either select another transmitter covering that portable radios "home" zone, or initiate a polling sequence in which the selected portable radio is polled in every zone in the data communications system starting with the portable radio's "home" zone.

Assuming that the SSI matrix is 10, 10, 10 for a transmission from a selected portable radio, the ZADJ matrix will be 155, 153, 157, 207, 202, 212, 226 using the predetermined factors in the above ZSEL matrix. For this particular transmission from that portable radio, the zone having the largest adjusted signal strength is zone $Z7$ and the zone having the second largest adjusted signal strength is zone $Z6$. Referring to Figure 2, the portable station is most probably located in zone $Z7$ which is approximately midway between CCM'S 210, 220 and 230. The second most likely location of the portable station is zone $Z6$ which is between CCM's 220 and 230. The transmitters $T1$, $T2$ and $T3$ in Figure 2 can be assigned to cover the seven zones as follows: Zone $Z1$ is covered by $T1$, zone $Z2$ is covered by $T2$, zone $Z3$ is covered by $T3$, zone $Z4$ is covered by $T1$, zone $Z5$ is covered by $T2$, zone $Z6$ is covered by $T3$, and zone $Z7$ is covered by $T1$. For transmitting a message signal to the portable radio, transmitter $T1$ is used first since zone $Z7$ has the largest adjusted signal strength. If the portable radio does not acknowledge the first transmission or subsequent re-transmissions from transmitter $T1$, the message signal is next transmitted by transmitter $T3$ for covering zone $Z6$, which had the second largest adjusted signal strength for the last transmission from the portable radio.

Assuming that on a subsequent transmission from the portable radio the SSI matrix is 10, 10, 0, the ZADJ matrix is 155, 153, 0, 107, 202, 102, 152. In this case, zone $Z5$ has the largest adjusted signal strength, and zone $Zi$ has the second largest adjusted signal strength. Therefore, a message signal would first be transmitted by transmitter $T2$ for covering zone $Z5$, and thereafter transmitted by transmitter $T1$ for covering zone $Z1$.

Again, assuming that a subsequent transmission from the portable station results in an SSI matrix that is 0, 10, 10, than the ZADJ matrix is 0, 153, 157, 100, 98, 212, 149. In this case, zone $Z6$ has the largest adjusted signal strength, and zone $Z3$ has the second largest adjusted signal strength. Since transmitter $T3$ covers both zone $Z6$ and zone $Z3$, a message signal transmitted by transmitter $T3$ will reach the portable radio if it is in either zone $Z6$ or zone $Z3$. For a subsequent transmission, zone $Z2$ has the third largest adjusted signal strength and is covered by transmitter $T2$.

Next, the transmitter re-use feature of the present invention may be illustrated by the seven zone arrangement in Figure 2. First of all, there is no transmitter interference for communications to portable radios located in zones $Z1$, $Z2$ or $Z3$. That is, transmitter $T1$, $T2$ and $T3$ can be operated simultaneously for communicating with portable radios in zones $Z1$, $Z2$ and $Z3$, respectively. However, for zone $Z4$, transmitter $T3$ must be offs for zone $Z5$ transmitter $T1$ must be off; for zone $Z6$ transmitter $T2$ must be off; and for zone $Z7$ transmitters $T2$ and $T3$ must be off. Using the foregoing interference criteria, transmitter re-use is possible for all zones except for zone $Z7$. For example, if the portable radio is located in zone $Z4$, transmitter $T1$ is used to communicata with that portable radio, and transmitter $T2$ can be simultaneously operated for communicating with portable radios in zone $Z2$. Similarly, while transmitter $T3$ is used for communicating with a portable radio in zone $Z6$, transmitter $T2$ must be off and transmitter $T1$ can be on. In this case, transmitter $Z1$ could be on and communicating with a portable radio located in zone $Z1$. Both a transmitter selection TSEL matrix and a zone interference ZIF matrix can be used to show the above criteria. The TSEL matrix is as follows:

|  |  | T1 | T2 | T3 |
|---|---|---|---|---|
|  | Z1 | 1 | 0 | 0 |
|  | Z2 | 0 | 1 | 0 |
|  | Z3 | 0 | 0 | 1 |
| [TSEL] = | Z4 | 1 | 0 | 0 |
|  | Z5 | 0 | 1 | 0 |
|  | Z6 | 0 | 0 | 1 |
|  | Z7 | 1 | 0 | 0 |

A one in the TSEL matrix indicates that the transmitter in that column is used for communicating with a portable radio located in the zone in that row.

The ZIF matrix is as follows:

|  |  | T1 | T2 | T3 |
|---|---|---|---|---|
| $[ZIF] =$ | Z1 | 0 | 0 | 0 |
|  | Z2 | 0 | 0 | 0 |
|  | Z3 | 0 | 0 | 0 |
|  | Z4 | 0 | 0 | 1 |
|  | Z5 | 1 | 0 | 0 |
|  | Z6 | 0 | 1 | 0 |
|  | Z7 | 0 | 1 | 1 |

A one in the ZIF matrix means that the transmitter in that column cannot be transmitting if it is desired to communicate with a portable radio located in the zone in that row.

Both of these matrices can be provided by tables that are stored in the memory of GCC 104 in Figure 1. GCC 104 uses both of this matrices during the process of selecting a transmitter for communicating a message signal to a selected portable radio. For example, assuming a portable radio is in zone Z5, transmitter T2 is used and transmitter T1 must be off.

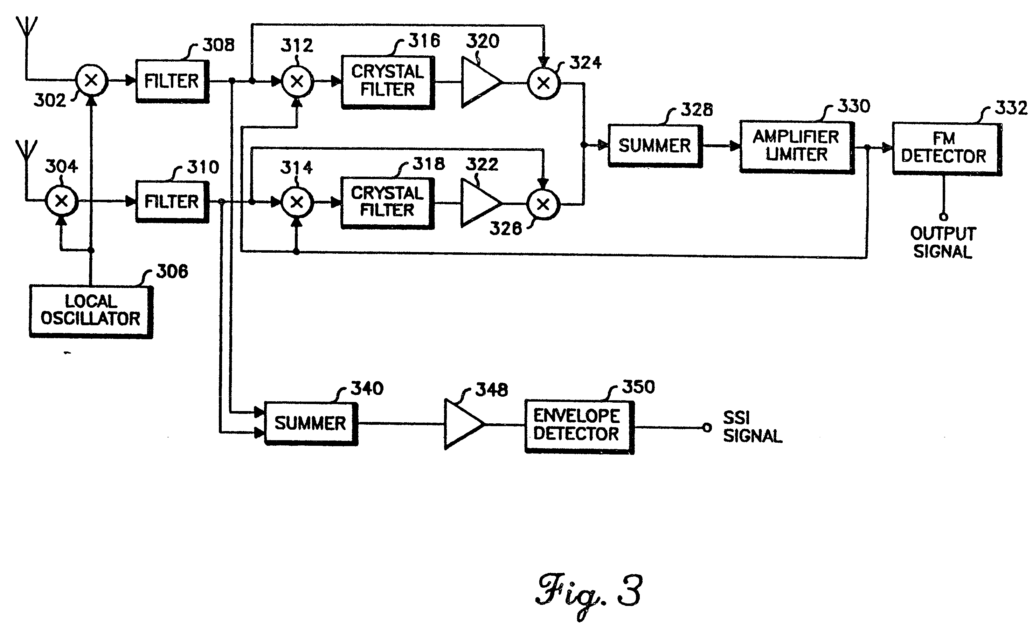

Referring to Figure 3, there is illustrated a detailed circuit diagram of the receivers 116, 118, 122, 126 and 128 associated with CCM'S 106, 108, 110 and 112 in Figure 1. Each receiver includes two antennas spaced at a predetermined distance from one another and a maximal ratio predetection diversity combiner 312, 314, 316, 318, 320, 322, 324, 326 and 328 for combining the signals received by each of the antennas. The space diversity provided by the two antennas is utilized to prevent degradation in communications which results when an antenna is located in an RF signal null. Rapid and deep RF signal nulls, called Rayleigh fading, are experienced in communications systems operating at RF signal frequencies in the new 800 to 900 mHz frequency range. The maximal ratio predetection diversity combiner cophases the RF signals from each antenna and linearly adds the cophased signals to provide a composite signal having components that are proportional to the square of the RF signals from each antenna. Therefore, strong signals are emphasized much more than weak signals. In other words, communications are not adversely affected if a very weak signal is received by one antenna and a reasonably good signal is received by the other antenna.

In the diversity receiver in Figure 3, the frequency of local oscillator 306 determines the radio channel to which the diversity receiver is tuned. The RF signal received by each antenna is combined by mixers 302 and 304 with the signal from local oscillator 208 to provide corresponding IF signals. The IF signal from mixers 302 and 304 is then applied to IF bandpass filters 308 and 310, respectively, which may be a monolithic bandpass filter of conventional design similar to that described in U.S. patent no. 3,716,808. The filtered IF signals from filters 308 and 310 are split and fed forward via two paths to mixers 312, 324 and 314, 326, respectively. First portions of the IF signals are applied to mixers 324 and 326, and second portions of the IF signals are applied to mixers 312 and 314 together with the composite IF signal which is fed back from amplifier 330. By feeding back the composite IF signal, the IF strip of the diversity receiver forms a closed feedback loop that is regenerative on noise. Thus, the randomly varying phase of the IF signals from filters 308 and 310 relative to the composite IF signal is added into the closed loop via mixers 312 and 314 and then substracted out at mixers 324 and 326, respectively. By this process, the random phase variations are removed from the If signals in relation to the composite IF signal. The result is that each of the IF signals is cophased to the composite IF signal.

The product signals from mixers 312 and 314 at the difference frequency are applied to filters 316 and 318, respectively, which each provide a variable phase shift. Filters 316 and 318 may be two-pole crystal filters. The signals from filters 316 and 318 are linearly amplified by amplifiers 320 and 322, respectively, and applied to the second input of mixers 324 and 326, respectively. Mixers 324 and 326 multiply the signals from amplifiers 320 and 322, respectively, with the IF signals from filters 308 and 310, respectively, to provide product signals that are cophased with the composite IF signal. The product signals from mixers 324 and 326 are both cophased and proportional to the square of the level of the IF signals from filters 308 and 310, respectively. The product signals from the mixers 324 and 326 are linearly added by summer 328 to form one composite IF signal. The composite IF signal may be coupled via amplifier 330 to a conventional FM detector 332 which has an output signal providing demodulated message signals. The output signal of FM detector 332 is coupled to its corresponding CCM 106, 108, 110 or 112 in Figure 1. Further details of the circuitry in the diversity receiver in Figure 3 are illustrated and described in the instant assignee's co-pending US patent applications, serial no. 22,757 (now US patent number 4,369,520) filed on March 22, 1979, entitled "Instantaneously Acquiring Sector Antenna System", and invented by Frank J. Cerny, Jr. and James J. Mikulski, and in serial no. 268,613 (now Canadian patent number 1,141,137), filed on June 1, 1981, entitled "Large Dynamic Range Multiplier for a Maximal Ratio Diversity Combiner", and invented by Frank J. Cerny, Jr.

Figure 3 also illustrates the circuitry 340, 348 and 350 comprising the signal strength detector that is located in the receivers. Summer 340 is coupled to the signals from filters 308 and 310 and provides a composite signal which is coupled to amplifier 348. The output of amplifier 348 is coupled to envelope detector 350 which provides an SSI signal that is proportional to the maxima of the composite signal from amplifier 348. A separate amplifier 348 and envelope detector 350 can be provided for each of the signals from filters 308 and 310 if it is desired to measure each separately . The SSI signal from envelope detector 350 is coupled to its corresponding CCM 106, 108, 110 or 112 in Figure 1, where it is digitized. Many other types of commercially available signal strength detecting circuitry can be utilized in place of summer 340, amplifier 348, and envelope detector 350.

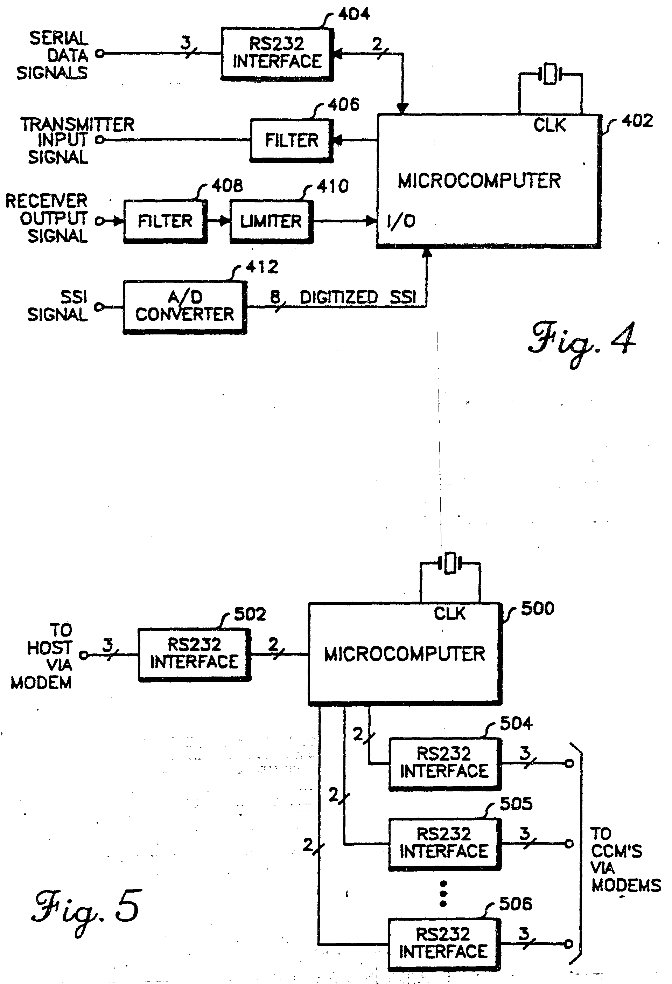

Referring to Figure 4, there is illustrated a block diagram of the circuitry in CCM's 106, 108, 110 and 112 in Figure 1. Each CCM includes a microcomputer 402 having a memory with stored program therein for communicating with GCC 104 and portable radios 130, 132 and 134 in Figure 1. Microcomputer 402 can be any suitable commercially available microcomputer such as, for example, the Motorola type MC6800, MC6801 or MC68000 microprocessor, or those microprocessors described in U.S. patent numbers 4,030,079 and 4,266,270, and the patents and patent applications referred to therein.

Microcomputer 402 is coupled to RS232 interface 404 which may be coupled by a modem to a dedicated telephone line from GCC 104 in Figure 1. Message signals received by microcomputer 402 from the GCC may be coupled to filter 406 and thereafter applied to its corresponding transmitter. The message signals may be coded according to frequency-shift keying, phase-shift keying or any other suitable existing encoding scheme. Suitable message signal coding schemes are described in the aforementioned US patent nos. 3,906,445, 4,156,867 and 4,354,252. Message signals received from portable radios by the CCM's receiver are coupled to filter 408 and thereafter to limiter 410 which converts the analog signals into a non-return-to-zero binary signal. The output of limiter 410 is applied to an input port of microcomputer 402.

Microcomputer 402 also takes signal strength readings while it is receiving message signals. The SSI signal from its corresponding receiver is coupled to A/D converter 412, which may continuously convert the analog SSI signal to a digitized SSI signal. The digitized SSI signal from A/D converter 412 is applied to an input port of microcomputer 402. Several A/D conversions are performed while a message signal is being received. The digitized SS1 signals for the several conversions are averaged by microcomputer 402. The average SSI signal is appended to the received message signal which is sent by microcomputer 402 via RS232 interface 404 to GCC 104 in Figure 1.

Referring to Figure 5, there is illustrated a block diagram of the circuitry in the general communications controller 104 in Figure 1. The GCC includes a microcomputer 500 having a memory with a stored program for communicating with CCM's 106, 108, 110 and 112 in Figure 1. Microcomputer 500 is coupled to RS232 interfaces 504, 505 and 506 which may be coupled by modems to dedicated telephone lines from each CCM. Microcomputer 500 is also coupled to RS232 interface 502 which may be coupled to a dedicated telephone line from host computer 102 in Figure 1. Information in message signals received from portable radios by way of CCM's 106, 108, 110 and 112 is forwarded by microcomputer 500 to host computer 102. Conversely, information to be sent to portable radios from host computer 102 is transmitted to microcomputer 500 and incorporated into message signals transmitted to designated portable radios. Microcomputer 500 receives signal strength information from each of the CCM's whenever a portable radio transmits a message signal and processes the signal strength information to determine the zone in which that portable radio is presently located.

Microcomputer 500 stores for each portable radio the zone having the largest adjusted signal strength for the last transmission, the zone having the second largest adjusted signal strength for the last transmission, the "home" zone assigned to that portable radio, and the last zone used for communications with that portable radio. For subsequent transmissions of message signals to a portable radio, the GCC accesses the zone location information for that portable radio and selects a transmitter for transmitting a message signal in the zone in which the portable radio is most likely located. Microcomputer 500 also keeps track of which transmitters are in use and which transmitters interfere with communications in a particular zone. Thus, when transmitting a message signal in the zone where a selected portable radio is located, microcomputer 500 inhibits the use of other transmitters which would interfere with communications in that zone. If transmission of a message signal to a portable radio would interefere with a transmission already under way, microcomputer 500 queues that message signal for transmission when the interfering transmitter has completed its transmission. Microcomputer 500 can be any suitable commercially available microcomputer, such as, for example, a Motorola type MC6800, MC6801 or MC68000 microprocessor, or those microprocessors described in U.S. patent numbers 4,030,079 and 4,266,270 and the patents and patent applications referred to therein.

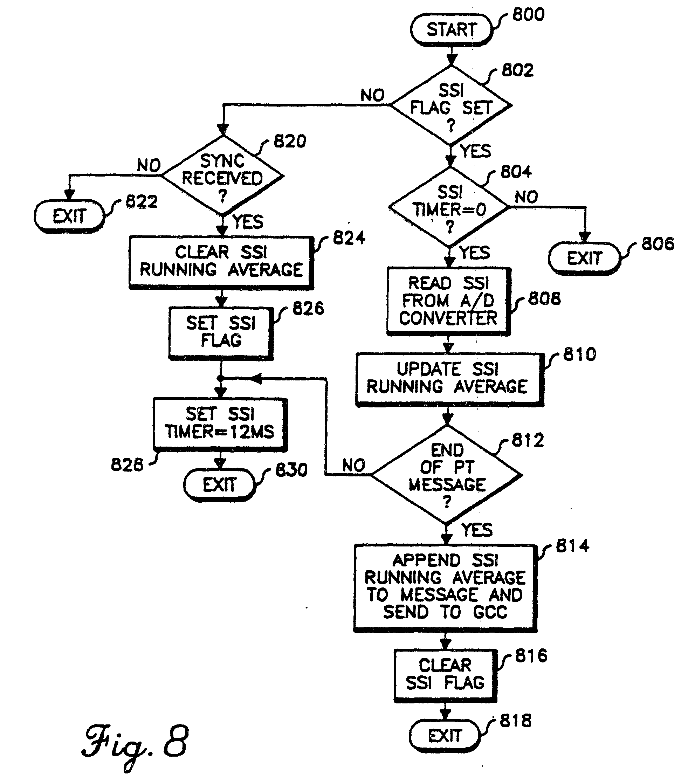

Referring next to Figure 8, there is illustrated a flow chart including the process steps used by CCM's 106, 108, 110 and 112 in Figure 1 for measuring the signal strength of RF signals transmitted by portable radios. The flow chart in Figure 8 provides a detailed description of the process steps required for execution by microcomputer 402 in Figure 4. The coding of the process steps of the flow chart in Figure 8 into the instructions of a suitable commercially available microcomputer is a mere mechanical step for a routineer skilled in the art.

Entering the flow chart in Figure 8 at start block 800, a check is made to see if the SSI flag is set at decision block 802. If the SSI flag is not set, NO branch is taken to decision block 820 where it is determined whether or not a SYNC (synchronization) word has been detected. The SYNC word is part of each data packet in a message signal and is followed by alphanumeric information. The particular bit pattern of the SYNC word is detected by microcomputer 402 in Figure 4. Signal strength measurements need not be taken until a SYNC word is detected. Once a SYNC word has been detected, several signal strength measurements can be taken at different times during receipt of the message signal and then averaged to obtain a more realistic estimate of the signal strength for the portable radio transmitting that message signal.

If a SYNC word has not been received, NO branch is taken from decision block 820 to block 822 to exit from the flow chart in Figure 8. Otherwise, YES branch is taken from decision block 820 to block 824 where the SSI running average is cleared. Next, at block 826, the SSI flag is set, and then at block 828 the SSI timer is set to twelve milliseconds. Assuming that a data packet has a length of approximately twenty-four milliseconds, the SSI timer is set at twelve milliseconds so that two signal strength measurements will be taken for each data packet. Next, the flow chart is exited at block 830.

Returning back to block 802 in Figure 8, the SSI flag is set whenever a message signal is being received from a portable radio. Assuming the SSI flag was previously set, YES branch is taken from decision block 802 to decision block 804 where it is determined if the SSI timer is equal to zero. Assuming that microcomputer 402 in Figure 4 is interrupted once every millisecond, the SSI timer may be decremented and the flow chart in Figure 8 may be executed every millisecond in response to each interrupt. As a result, the SSI timer will be zero twelve milliseconds after a SYNC word has been received. If the SSI timer is not equal to zero, NO branch is taken to exit from the flow chart at block 806. Otherwise, YES branch is taken to block 808 where the digitized SSI signal is read from A/D converter 412 in Figure 4. Next, at block 810, the newly read digitized SSI signal is averaged with the SSI running average.

Proceeding to decision block 812 in Figure 8, a check is made to determine if the end of the portable radio message signal has been reached. If the end of the message signal has not been reached, NO branch is taken to block 828 where the SSI timer is set to twelve milliseconds for taking another signal strength measurement. Otherwise, YES branch is taken from decision block 812 to block 814, where the SSI running average is appended to the message signal which is sent to GCC 104 in Figure 1. Next, at block 816, the SSI flag is cleared in preparation for receipt of subsequent message signals, and the flow chart is exited at block 818.

The process steps of the flow chart in Figure 8 are designed to take two signal strength measurements for each data packet in a message signal received from a portable radio. For example, if there are four data packets in a message signal, eight signal strength measurements are taken and averaged. All CCM's 106, 108, 110 and 112 in Figure 1 receiving the same message signal from a portable radio are likewise taking two signal strength measurements per data packet and appending the average signal strength to the message signal that is routed to the GCC. Therefore, within a short period of time, the GCC will be receiving several different average signal strength measurements from the CCM's that receive the same message signal from a portable radio.

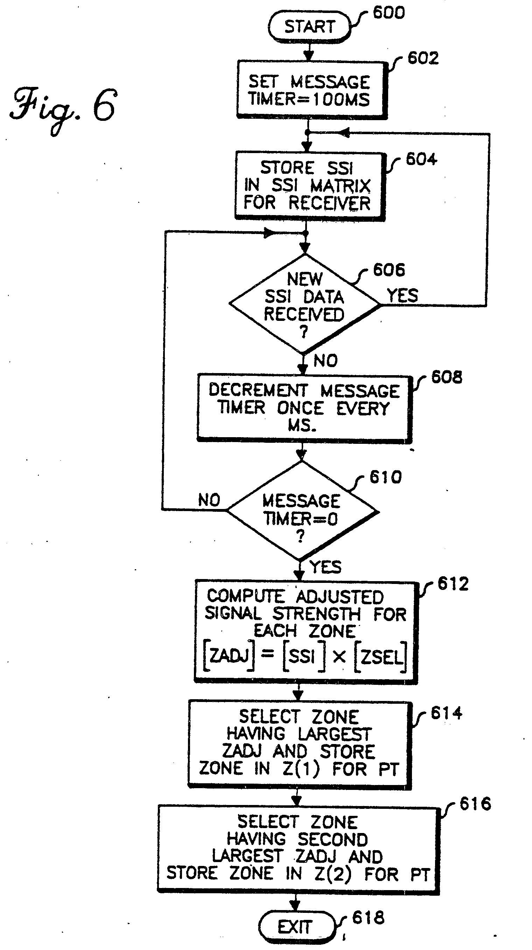

Referring to Figure 6, there is illustrated a flow chart used by GCC 104 for processing the average signal strength measurements received from each of the CCM's 106, 108, 110 and 112 in Figure 1. The flow chart in Figure 6 is entered at start block 600 whenever a message signal together with an average signal strength measurement is received from a CCM. Next, at block 602 a message timer is set to one-hundred milliseconds to provide a time interval during which the same message signal is received by other CCM's and sent together with an average signal strength measurement to the GCC. All CCM's should receive, if at all, the same message signal at approximately the same time. The one-hundred millisecond message time interval is utilized to allow for CCM processing and transmission delays. Assuming that microcomputer 500 in Figure 5 is interrupted once every millisecond, the message timer may be decremented in response to each interrupt.

Next, at block 604 in Figure 6, the average signal strength measurement received with a message signal is entered into the SSI matrix in the position for the receiver that took the measurement. Proceeding to decision block 606, a check is made to see if another average signal strength measurement has been received from another CCM. If so, YES branch is taken back to block 604. Otherwise, NO branch is taken to block 608 where the message timer is decremented once every millisecond. Next, at decision block 610 a check is made to see if the message timer is equal to zero. If not, NO branch is taken back to decision block 606 to check to see if another average signal strength measurement has been received. Otherwise, YES branch is taken to block 612 for processing the average signal strength measurements that have been received during the previous one-hundred millisecond time interval.

Proceeding to block 612 in Figure 6, an adjusted signal strength is computed for each zone using the newly received average signal strength measurements that have been entered into the SSI matrix and the predetermined factors previously entered into the ZSEL matrix. The ZADJ matrix is computed by multiplying the SSI matrix and the ZSEL matrix according to the formula:

$$[ZADJ] = [SSI] \times [ZSEL]$$

The resulting ZADJ matrix has one adjusted signal strength for each zone in the data communications system. Since some of the zones may be in different cities, some of the adjusted signal strengths may be zero. For the zone configuration in Figure 2, it is possible that transmissions from a portable radio will be received by all three receivers R1, R2 and R3, producing an adjusted signal strength for all seven zones Z1-Z7.

According to another feature of the present invention, the SSI matrix can be stored and later used in combination with the SSI matrix for the next transmission from the same portable radio. For example, the signal strength measurements in the stored SSI matrix can be decreased on the basis of the time interval between the previous and newly received transmission from the portable radio. Next, the decreased signal strength measurements and the new signal strength measurements may be averaged for each CCM receiver, and the average signal strength measurements may be used to calculate the ZADJ matrix in block 612. The updated average signal strength measurements may then be stored in the SSI matrix for use with the signal strength measurements taken for a subsequent transmission from the same portable radio

Next, at block 614 in Figure 6, the zone having the largest adjusted signal strength in the ZADJ matrix computed in block 612 is selected and stored in zone location Z(1) for the portable radio whose transmitted message signal was received by each of the CCM'S. The number of CCM'S receiving a message signal and making a signal strength measurement for a portable radio will vary depending both on the location of the portable radio and the terrain and location of receivers in the geographical area of the data communications system. In other words, depending on the location of a portable radio, as few as one and potentially all of the CCM receivers may receive the same message signal from a portable radio.

Next, at block 616, the zone having the second largest adjusted signal strength in the ZADJ matrix is selected and stored in zone location Z(2) for the particular portable radio. Zone locations Z(1) and Z(2) are the most likely zones in which that portable radio is located. Every time the portable radio transmits a message signal, new signal strength measurements are taken and the zones stored in zone locations Z(1) and Z(2) are updated. Therefore, according to the present invention, the location of each portable radio is updated every time that portable radio transmits a message signal using the average signal strength measurement taken by all of the CCM receivers that receive its message signal. Since the signal strength measurements from all CCM receivers receiving the same message signal are used, a reasonably accurate determination of the portable radio's location can be made. To insure that location information does not become stale, GCC in Figure 1 can initiate a short where-are-you message signal for those portable radios that have been inactive for a relatively long period of time.

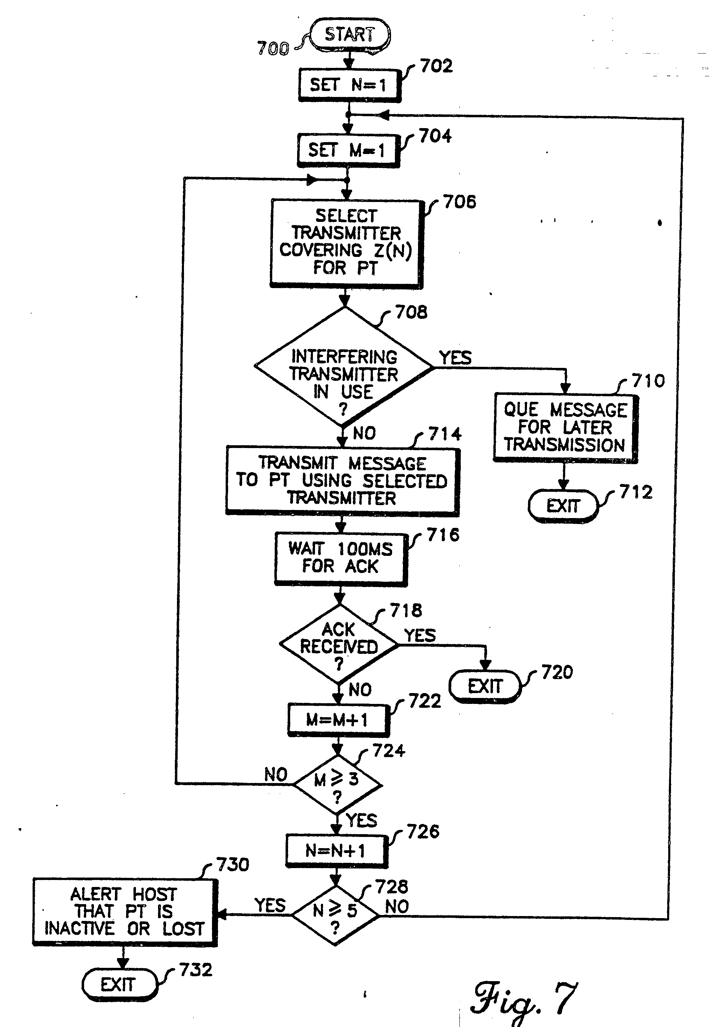

Whenever it is desired to transmit a message signal. from GCC 104 in Figure 1 to a selected portable radio, the flow chart in Figure 7 is utilized by the GCC for selecting the CCM transmitter covering the zone in which the selected portable radio is most likely to be located. Entering the flow chart in Figure 7 at start block 700, N is set equal to 1 at block 702 and M is set equal to one at block 704. N is an integer number used to determine which zone location Z(1), Z(2), Z(3) or Z(4) is selected, and M is an integer number used to determine the number of re-transmissions made to a particular zone.

Next, at block 706 in Figure 7, the GCC selects the transmitter covering zone location Z(N) for the selected portable radio. Initially, the GCC selects zone location Z(1). As previously explained, zone location Z(1) is the zone having the largest adjusted signal strength for the last transmission from the selected portable radio, zone location Z(2) is the zone having the second largest adjusted signal strength for the last transmission from the selected portable radio, zone location Z(3) is the "home" zone for the selected portable radio, and zone location Z(4) is the zone location used for the last transmission to the selected portable radio.

Proceeding next to decision block 708 in Figure 7, a check is made to see if an interfering transmitter is in use. The interfering transmitters are determined by reference to the ZIF matrix, which identifies transmitters that interfere with communications in zone location Z(N). If an interfering transmitter is in use, YES branch is taken to block 710 where the message signal is queued for later transmission to the selected portable radio, and the flow chart is exited at block 712. If an interfering transmitter is not in use, NO branch is taken to block 714 where a message signal is transmitted to the selected portable radio using a transmitter selected from the TSEL matrix for covering zone location Z(N). At the same time, interfering transmitters selected from the ZIF matrix for zone location Z(N) may be inhibited from transmitting while the message signal is being sent to the selected portable radio.

Next, at block 716 in Figure 7, the GCC waits for one hundred milliseconds to determine if an acknowledgement message has been received from the selected portable radio. If the selected portable radio is actually in zone location Z(N) and receives the transmitted message signal, it will transmit an acknowledgement signal indicating that the message signal has been properly received. Proceeding to decision block 718, a check is made to see if an acknowledgement signal has been received. If so, YES branch is taken to block 720 and the flow chart is exited. In other words, the message signal has been successfully communicated to the selected portable radio. If an acknowledgement signal has not been received, NO branch is taken to block 722 where M is incremented by 1. The variable M is used to provide for one or more re-transmissions of the message signal to the same zone location. In the preferred embodiment, one re-transmission is allowed. Therefore, at decision block 724 a check is made to see if M is greater than or equal to three. If M is less than three, NO branch is taken back to block 706 for re-transmitting the message signal to zone location Z(N). If M is greater than or equal to three, YES branch is taken to block 726 for preparing to transmit the message signal in the next zone location.

At block 726 in Figure 7, N is incremented by one for selecting the next zone location. Proceeding to decision block 728, a check is made to see if N is greater than or equal to five. If N is less than five, NO branch is taken to block 704 where M is set equal to one and the process steps are repeated for the next zone location Z(N). The process steps are repeated beginning at block 704 for each of the zone locations Z(2), Z(3), and Z(4) so that a message signal is transmitted, and re-transmitted once, in all four stored zone locations in an attempt to communicate a message signal to a selected portable radio. If N is greater than or equal to five, YES branch is taken from decision block 728 to block 730 where the GCC alerts host computer 102 in Figure 1 that the portable radio is either inactive or lost. At this point in time, the host computer may decide to poll the portable radio in every zone of the data communications system. Such a poll would be conducted on a low priority basis using a minimum length message signal. Next, the flow chart in Figure 7 is exited at block 732.

The flow charts in Figures 6 and 7 provide a detailed description of the process steps used by GCC microcomputer 500 in Figure 5 for communicating message signals to portable radios. The coding of the process steps of the flow charts in Figure 6 and 7 into the instructions of a suitable commercially available microcomputer is a mere mechanical step for a routineer skilled in the art. By way of analogy to an electrical circuit diagram, the flow charts in Figures 6, 7 and 8 are equivalent to a detailed schematic for an electrical circuit where provision of the exact part values for the electrical components in the electrical schematic corresponds to provision of microcomputer instructions for blocks in the flow charts.

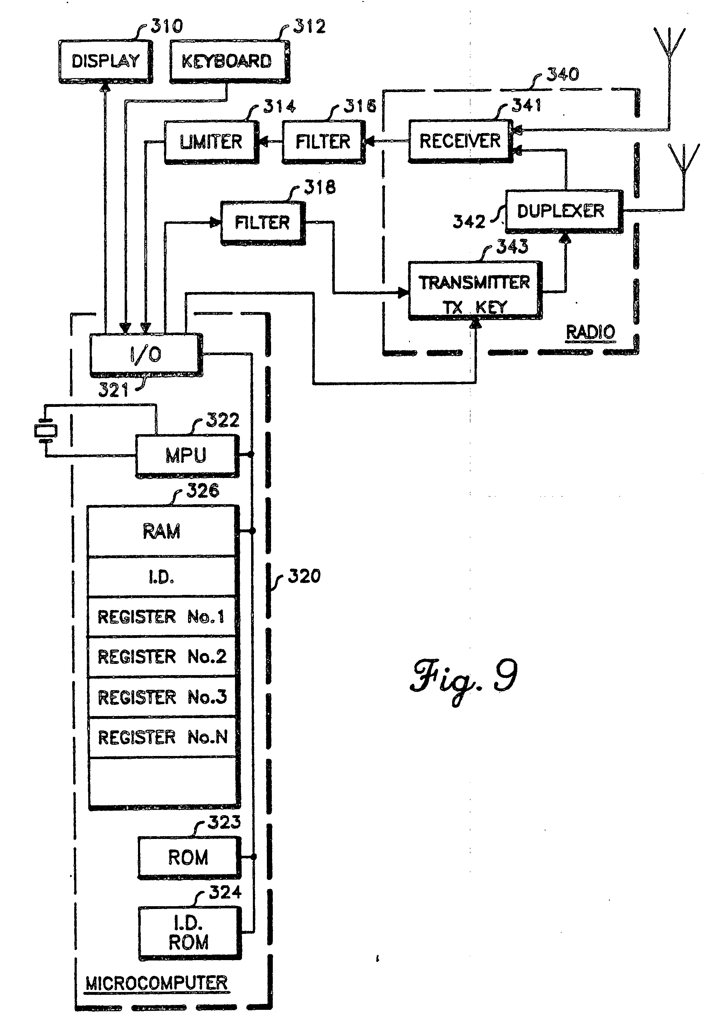

Referring to Figure 9, there is illustrated a block diagram of the circuitry in portable radios 130, 132 and 134 in Figure 1. Each portable radio includes a radio transceiver 340, a microcomputer 320, an alphanumeric display 310, and a keyboard 312. Alphanumeric display 310 may be any commercially available display, such as an LCD display or gas discharge display, that provides for the display of one or more lines of alphanumeric information. Display 310 is controlled by I/O device 321 of microcomputer 320. Keyboard 312 may be any commercially available keyboard having both numeric and alphanumeric keys. Keyboard 312 is coupled to I/O device 321 of microcomputer 320, which senses activation of its various keys.

Radio transceiver 340 in Figure 9 may be any suitable commercially available transceiver, such as that described in the aforementioned Motorola instruction manual no. 68P81039E25 and in Motorola instruction manual no. 68P81014C65. Radio transceiver 340 includes two antennas spaced at a predetermined distance from one another for providing receiver diversity. Receiver 341 is coupled directly to one antenna and coupled by duplexer 342 to the other antenna. Duplexer 342 may be any suitable commercially available duplexer such as that described in U.S. patent number 3,728,731. Receiver 341 may include suitable commercially available circuits for selecting between the two antennas, such as, for example, the antenna selection circuitry in the aforementioned Motorola instruction manual no. 68P81039E25. Receiver 341 demodulates message signals transmitted from the CCM transmitters. The demodulated message signals are filtered by filter 316 and limited by limiter 314 and thereafter applied to I/O device 321 of microcomputer 320. Message signals from I/O device 321 of microcomputer 320 are applied to filter 318 and thereafter to transmitter 343 for transmission to CCM receivers. Transmitter 343 is turned on in response to the TX key signal from I/O device 321 of microcomputer 320. The output of transmitter 343 is coupled to one of the radio transceiver antennas by way of duplexer 342.

Microcomputer 320 in Figure 9 includes I/O devices 321, microprocessor (MPU) 322, random-access memory (RAM) 326, read-only memory (ROM) 323, and I.D. ROM 324. MPU 322 may be any suitable commercially available microprocessor, such as, for example, the Motorola type MC6800, MC6801 or MC68000 microprocessors, or those microprocessors described in U.S. patent numbers 4,030,079 and 4,266,270 and the patent applications referred to therein. Similarly, I/O device 321, RAM 326, ROM 323 and I.D. ROM 324 may be any commercially available devices that are suitable for operation with the type of microprocessor selected for MPU 322. I.D. ROM 324 is a removable device that includes a specific identification code or address that is assigned to a portable radio. ROM 323 stores the control program that is executed by MPU 322 for communicating message signals and acknowledgement signals to GCC 104 in Figure 1. RAM 326 includes both a scratch pad area used by MPU 322 during execution of the control program stored in ROM 323 and a number of register locations allocated for storing the identification code read in by MPU 322 from I. D. ROM 324, information displayed by display 310, information entered from keyboard 312, and other status information. The contents of specific registers in RAM 326 may be loaded from message signals received from GCC 104 in Figure 1 or may be included in message signals sent by 35 MPU 322 to the GCC.

The portable radio illustrated in Figure 9 may be 5 either a mobile radio that is installed in a vehicle or a portable radio that is small enough to be hand-carried from place to place (See the aforementioned Motorola instruction manual Number 68P81014C65). Although the portable radio in Figure 9 is primarily adapted to transmit and receive message signals including alphanumeric information, the portable radio may also provide voice communications by means of a speaker connected to the output of receiver 341 and a microphone connected to the input of transmitter 343. A portable radio adapted to communicate both alphanumeric information and voice signals is described in the instant assignee's co-pending U.S. patent application serial number 323,644 (see PCT application no. 82/01606, now published as WO/01875), filed November 20, 1981, entitled, "Data Muting Method and Apparatus for Radio Communications System", and invented by Thomas A. Freeburg et. al.

In summary, unique methods and apparatus for transmitter selection and transmitter re-use in data communications systems have been described. By selecting the proper transmitter for transmitting message signals to portable radios, unnecessary transmissions are eliminated, freeing up the radio channel for communications with other portable radios. Moreover, transmitters which do not interfere with communications already underway to a particular zone can be simultaneously, transmitting message signals to portable radios in other zones, thus greatly enhancing message signal throughput.

**Claims**

1. A method, for use in a primary station (104, 106, 108, 110, 112) of a communications system for communicating message signals via a communications medium between the primary station and a plurality of remote stations (130, 132, 134) located anywhere in a geographical area that is divided into a plurality of zones, said primary station including control means and a plurality of receiving means (116, 118, 122, 126, 128) for receiving message signals modulated on a carrier signal, each zone covered by at least one receiving means, and said remote stations including transmitting means (343) for transmitting message signals modulated on the carrier signal, for determining the zone in which each remote station is located, said method CHARACTERIZED BY the steps of:

   a) measuring (808, 810) the signal strength of the carrier signal received by each primary station receiving means during each transmission from each remote station;

   b) computing (612) an adjusted signal strength for each zone by adjusting the measured signal strength for each primary station receiving means by corresponding predetermined factors associated with the zone and combining the adjusted signal strengths for each remote station; and

   c) dynamically selecting (614) for each remote station the zone having the largest adjusted signal strength for the last transmission from that remote station.

2. The method according to claim 1, wherein said primary station further includes a plurality of transmitting means (114, 120, 124) for transmitting message signals modulated on a carrier signal different from the primary station receiving means carrier signal, and said remote stations further include receiving means (341) for receiving message signals modulated on the primary station transmitting means carrier signal, said method further CHARACTERIZED BY the step of d) selecting (706) for communicating with a selected remote station the primary station transmitting means covering the zone which had the largest adjusted signal strength for the last transmission from the selected remote station.

3. The method according to claim 2, further CHARACTERIZED BY the step of e) storing (612) an indication signal indicating which zone had the largest adjusted signal strength for the last transmission from the selected remote station.

4. The method according to claim 3, wherein said selected remote station transmits an acknowledgement signal modulated on the second carrier signal in response to receiving a message signal from said primary station control means, said method further CHARACTERIZED BY the steps of:

   f) modulating (714) a message signal on the first carrier signal of the primary station transmitting means selected in step d);

   g) modulating (716, 718, 714) the message signal on the first carrier signal of the primary station transmitting means covering the zone indicated by the stored indication signal if the acknowledgement signal is not received by at least one of the primary station receiving means within a predetermined time interval after the message signal has been transmitted in step f).

5. The method according to claim 2, further CHARACTERIZED BY the step of e) modulating (714) a message signal on the carrier signal of the primary station transmitting means selected in step d).

6. The method according to claim 5 further CHARACTERIZED BY the step of f) disabling (714) those of other primary station transmitting means whose modulated first carrier signal interferes with the reception of signals in the zone having the largest adjusted signal strength for the last transmission from the selected remote station.

7. The method according to claim 2, further **CHARACTERIZED BY** the steps of:

e) repeating said steps a) and b) for a second selected remote station;

f) selecting (706, 708) one of the transmitting means from said other primary station transmitting means that does not interfere with the zone which had the largest adjusted signal strength for the last transmission from the first selected remote station and that covers the zone having the largest adjusted signal strength for the last transmission from the second selected remote station; and

g) modulating (714) a message signal on the carrier signal of the primary station transmitting means selected in step e).

8. The method according to claim 2, further **CHARACTERIZED BY** the steps of:

e) detecting (708) primary station transmitting means that interferes with reception in the zone which had the largest adjusted signal strength for the last transmission from the selected remote station; and
f) modulating (714) a message signal on the first carrier signal of the primary station transmitting means selected in step d) if no interfering primary station transmitting means is detected.

9. The method according to claim 1 or 2, wherein said step a) is further CHARACTERIZED BY the steps of:

i) storing (604) the measured signal strengths for each primary station receiving means;

ii) decreasing (612) previously stored measured signal strengths for each primary station receiving means for a previous transmission from the same remote station by an amount related to the time interval between the previous and present transmissions; and

iii) averaging (612) the measured signal strengths with the decreased previously stored measured signal strengths.

10. Control means for a primary station (104, 106, 108, 110, 112) of a communications system for communicating message signals via a communications medium between the primary station and a plurality of remote stations (130, 132, 134) located anywhere in a geographical area that is divided into a plurality of zones, said primary station further including a plurality of transmitting means (114, 120, 124) for transmitting message signals modulated on a first carrier signal and a plurality of receiving means (116, 118, 122, 126, 128) for receiving message signals modulated on a second carrier signal, each zone covered by at least one of the transmitting means and covered by at least one of the receiving means, and said remote stations including transmitting means (343) for transmitting message signals modulated on the second carrier signal and receiving means (341) for receiving message signals modulated on the first carrier signal; said control means **CHARACTERIZED BY:**

means (412, 402) for measuring the signal strength of the carrier signal received by each primary station receiving means during each transmission from each remote station;

means (500) for computing an adjusted signal strength for each zone by adjusting the measured signal strength for each primary station receiving means by corresponding predetermined factors associated with the zone and combining the adjusted signal strengths for each remote station; and

means (500) for dynamically selecting for each remote station the zone which had the largest adjusted signal strength for the last transmission from that remote station.

11. The control means according to claim 10, further CHARACTERIZED BY means (500) for storing an indication signal indicating which zone had the largest adjusted signal strength for the last transmission from each remote station.

12. The control means according to claim 10 or 11, further CHARACTERIZED BY means (500) for selecting for communicating with a selected remote station the primary station transmitting means covering the zone which had the largest adjusted signal strength for the last transmission from the selected remote station.

13. The control means according to claim 11, wherein each remote station includes means (320) for generating an acknowledgement signal in response to receiving a message signal from said control means, and means (318, 343) for modulating the acknowledgement signal on the second carrier signal of its transmitting means, said control means further **CHARACTERIZED BY:**

means (500) for selecting for communicating with a selected remote station the primary station transmitting means covering the zone which had the largest adjusted signal strength for the last transmission from the selected remote station; and

means (406, 402) for modulating a first message signal on the first carrier signal of the selected primary station transmitting means, said control means enabling said modulating means (406, 402) to modulate a second message signal on the first carrier signal of the primary station transmitting means covering the zone indicated by the stored indication signal if the acknowledgement signal is not received by at least one of the primary station receiving means within a predetermined time interval after the first message signal has been transmitted.

**Patentansprüche**

1. Verfahren zur Verwendung in einer Primärstation (104, 106, 108, 110, 112) eines Kommunikationssystems zum Mitteilen von Nachrichtensignalen über ein Kommunikationsmedium zwischen der Primärstation und einer Vielzahl von entlegenen Stationen (130, 132, 134), welche beliebig in einem in eine Vielzahl von Zonen unterteilten geographischen Bereich angeordnet sind, wobei die Primärstation Steuereinrichtungen und eine Vielzahl von Empfangseinrichtungen (116, 118, 122, 126, 128) zum Empfang von auf einem Trägersignal aufmodulierten Nachrichtensignalen aufweist, wobei jede Zone durch wenigstens eine Empfangseinrichtung abgedeckt ist und die entlegenen Stationen Übertragungseinrichtungen (343) zum Übertragen der auf dem Trägersignal aufmodulierten Nachrichtensignale aufweisen, wobei die Zone, in der jede entlegene Station lokalisiert ist, bestimmbar ist, gekennzeichnet durch die folgenden Schritte:

a) Messen (808, 810) der Signalstärke des bei jeder Empfangseinrichtung der Primärstation empfangenen Trägersignals während jeder Übertragung von jeder entlegenen Station;

b) Berechnen (612) einer abgeglichenen Signalstärke für jede Zone durch Abgleichen der gemessenen Signalstärke für jede Empfangseinrichtung der Primärstation durch entsprechend vorbestimmte, mit den Zonen assoziierte Faktoren und Kombinieren der Abgeglichenen Signalstärken für jede entlegene Station; und

c) Dynamisches Auswählen (614) für jede entlegene Station von der Zone, die die größte abgeglichene Signalstärke für die letzte Übertragung von der entlegenen Station aufweist.

2. Verfahren nach Anspruch 1, wobei die Primärstation eine Vielzahl von Übertragungseinrichtungen (114, 120, 124) zum Übertragen von auf einem Trägersignal aufmodulierten Nachrichtensignal aufweist, welche unterschiedlich zu dem Trägersignal der Empfangseinrichtungen der Primärstation ist, und wobei die entlegenen Stationen Empfangseinrichtungen (341) zum Empfang von auf dem Trägersignal der Übertragungseinrichtung der Primärstation aufmodulierten Nachrichtensignalen aufweisen, gekennzeichnet durch den weiteren Schritt:

d) Auswählen (706) der Übertragungseinrichtung der Primärstation zur Kommunikation mit einer ausgewählten entlegenen Station, welche Übertragungseinrichtung die Zone abdeckt, welche die größte abgeglichene Signalstärke bei der letzten Übertragung von der ausgewählten entlegenen Station aufwies.

3. Verfahren nach Anspruch 2, gekennzeichnet durch den weiteren Schritt:

e) Speichern (612) eines Indikationssignals, welches die Zone mit größter abgeglichener Signalstärke während der letzten Übertragung von der ausgewählten entlegenen Station anzeigt.

4. Verfahren nach Anspruch 3, wobei die ausgewählte entlegene Station ein auf dem zweiten Trägersignal aufmoduliertes Bestätigungssignal als Antwort auf den Empfang eines Nachrichtensignals von der Steuereinrichtung der Primärstation überträgt, gekennzeichnet durch die folgenden Schritte:

f) Aufmodulieren (714) eines Nachrichtensignals auf dem ersten Trägersignal der im Schritt d) ausgewählten Übertragungseinrichtung der Primärstation;

g) Aufmodulieren (716, 718, 714) des Nachrichtensignals auf dem ersten Trägersignal der Übertragungseinrichtung der Primärstation, welche die durch das gespeicherte Indikationssignal angezeigte Zone abdeckt, wenn das Bestätigungssignal nicht von wenigstens einer der Empfangseinrichtungen der Primärstation innerhalb eines vorbestimmten Zeitintervalles nach Übertragen des Nachrichtensignales im Schritt f) empfangen wurde.

5. Verfahren nach Anspruch 2, gekennzeichnet durch den weiteren Schritt:

e) Aufmodulieren (714) eines Nachrichtensignals auf dem Trägersignal der im Schritt d) ausgewählten Übertragungseinrichtung der Primärstation.

6. Verfahren nach Anspruch 5, gekennzeichnet durch den weiteren Schritt:

f) Abschalten (714) der anderen Übertragungseinrichtungen der Primärstation, deren modulierte erste Trägersignale den Empfang der Signale in der Zone stören, die die größte abgeglichene Signalstärke bei der letzten Übertragung der ausgewählten entlegenen Station aufwies.

7. Verfahren nach Anspruch 2, gekennzeichnet durch die weiteren Schritte:

e) Wiederholen der Schritte a) und b) für eine zweite ausgewählte entlegene Station;

f) Auswählen (706, 708) einer Übertragungseinrichtung der anderen Übertragungseinrichtungen der Primärstation, welche die Zone nicht stören, die die größte abgeglichene Signalstärke bei der letzten Übertragung von der ersten ausgewählten entlegenen Station aufwies und die die Zone mit der größten abgeglichenen Signalstärke bei der letzten Übertragung von der zweiten ausgewählten Station abdeckt; und

g) Aufmodulieren (714) eines Nachrichtensignals auf einem Trägersignal der im Schritt e) ausgewählten Übertragungseinrichtung der Primärstation.

8. Verfahren nach Anspruch 2, gekennzeichnet durch die weiteren Schritte:

e) Erfassen (708) einer Übertragungseinrichtung der Primärstatilon, welche den Empfang in der Zone mit der größten abgeglichenen Signalstärke bei der letzten Übertragung von der ausgewählten entlegenen Station nicht stört; und

f) Aufmodulieren (714) eines Nachrichtensignals auf dem ersten Trägersignal der im Schritt d) ausgewählten Übertragungseinrichtung der Primärstation, wenn keine störende Übertragungseinrichtung der Primärstation erfaßt wird.

9. Verfahren nach Anspruch 1 oder 2, wobei der Schritt a) durch folgende Schritte gekennzeichnet ist:

i) Speichern (604) der gemessenen Signalstärke für jede Empfangseinrichtung der Primärstation;

ii) Vermindern (612) von vorhergehend abgespeicherten gemessenen Signalstärken für jede Empfangseinrichtung der Primärstation für eine vorhergehende Übertragung der gleichen abgelegenen Station um einen Betrag, der mit dem Zeitintervall zwischen der vorhergehenden und der gegenwärtigen Übertragung in Relation steht; und

iii) Mitteln (612) der gemessenen Signalstärken mit den verminderten und vorhergehend gespeicherten, gemessenen Signalstärken.

10. Steuereinrichtung für eine Primärstation (104, 106, 108, 110, 112) eines Kommunikationssystems zum Übertragen von Nachrichtensignalen über ein Kommunikationsmedium zwischen der Primärstation und einer Vielzahl von entlegenen Stationen (130, 132, 134,), welche beliebig in einem, in eine Vielzahl von Zonen unterteilen geographischen Bereich lokalisiert sind, wobei die Primärstation weiterhin eine Vielzahl von Übertragungseinrichtungen (114, 120, 124) zum Übertragen von auf einem ersten Trägersignal aufmodulierten Nachrichtensignalen und eine Vielzahl von Empfangseinrichtungen (116, 118, 122, 126, 128) zum Empfangen von auf einem zweiten Trägersignal aufmodulierten Nachrichtensignal aufweist, wobei jede Zone durch wenigstens eine Übertragungseinrichtung und wenigstens eine Empfangseinrichtung abgedeckt ist und die abgelegenen Stationen Übertragungseinrichtungen (343) zum Übertragen von auf den zweiten Trägersignal aufmodulierten Nachrichtensignalen und Empfangseinrichtungen (341) zum Empfang von auf dem ersten Trägersignal aufmodulierten Nachrichtensignalen aufweisen, dadurch gekennzeichnet, daß die Steuereinrichtung aufweist:

eine Meßeinrichtung (412, 402) zum Messen der Signalstärke des von jeder Empfangseinrichtung der Primärstation empfangenen Trägersignales während jeder Übertragung von jeder abgelegenen Station;

eine Berechnungseinrichtung (500) zum Berechnen einer abgeglichenen Signalstärke für jede Zone durch Abgleichen der gemessenen Signalstärke für jede Empfangseinrichtung der Primärstation durch entsprechende vorbestimmte Faktoren, welche mit der Zone assoziiert sind, und Kombinieren der abgeglichenen Signalstärke für jede abgelegene Station; und

eine Einrichtung (500) zum dynamischen Auswählen einer Zone für jede abgelegene Station, welche die größte abgeglichene Signalstärke bei der letzten Übertragung von der abgelegenen Station aufwies.

11. Steuereinrichtung nach Anspruch 10, gekennzeichnet durch

eine Speichereinrichtung (500) zum Speichern eines Indikationssignals zur Anzeige der Zone mit der größten abgeglichenen Signalstärke bei der letzten Übertragung von jeder abgelegenen Station.

12. Steuereinrichtung nach Anspruch 10 oder 11, gekennzeichnet durch

eine Einrichtung (500) zum Auswählen einer Übertragungseinrichtung der Primärstation zur Kommunikation mit einer ausgewählten abgelegenen Station, welche Übertragungseinrichtung die Zone abdeckt, die die größte abgeglichene Signalstärke bei der letzten Übertragung von der ausgewählten abgelegenen Station aufwies.

13. Steuereinrichtung nach Anspruch 11, bei der jede abgelegene Station eine Einrichtung (320) zum Erzeugen eines Bestätigungssignales in Abhängigkeit eines Nachrichtensignals von der Steuereinrichtung und eine Einrichtung (318, 343) zur Aufmodulierung des Bestätigungssignals auf dem zweiten Trägersignal der Übertragungseinrichtung aufweist, dadurch gekennzeichnet, daß die Steuereinrichtung aufweist:

eine Auswahleinrichtung (500) zum Auswählen einer Übertragungseinrichtung der Primärstation zur Kommunikation mit einer ausgewählten, abgelegenen Station, welche Übertragungseinrichtung die Zone abdeckt, welche die größte abgeglichene Signalstärke bei der letzten Übertragung von der ausgewählten, abgeglichenen Station aufwies; und

eine Aufmoduliereinrichtung (406, 402) zum Aufmodulieren eines ersten Nachrichtensignals auf dem ersten Trägersignal der ausgewählten Übertragungseinrichtung der Primärstation, wobei die Steuereinrichtung die Aufmoduliereinrichtung (406, 402) wirksam schaltet, um ein zweites Nachrichtensignal auf dem ersten Trägersignal der Übertragungseinrichtung der Primärstation aufzumodulieren, welche die durch das gespeicherte Indikationssignal angezeigte Zone abdeckt, wenn das Bestätigungssignal von nicht wenigstens einer der Empfangseinrichtungen der Primärstation innerhalb eines vorbestimmten Zeitintervalles nach der Übertragung des ersten Nachrichtensignales empfangen wird.

## Revendications

1. Procédé destiné à être utilisé dans un poste primaire (104, 106, 108, 110, 112) d'un système de communications afin de communiquer des signaux de messages par l'intermédiaire d'un media de communication entre le poste émetteur primaire et une pluralité de postes distants (130, 132, 134) situés n'importe où dans un secteur géographique qui est divisé en une pluralité de zones, ledit poste primaire comprenant un moyen de contrôle et une pluralité de moyens de réception (116, 118, 122, 126, 128) destinés à recevoir des signaux de message modulés sur un signal porteur, chaque zone étant couverte par au moins un moyen de réception, et lesdits postes distants comprenant un moyen de transmission (343) destiné à transmettre des signaux de messages modulés sur le signal porteur, afin de déterminer la zone dans laquelle chaque poste distant est situé, ledit procédé étant caractérisé par les étapes qui consistent à :

a) mesurer (808, 810) la puissance de signal du signal porteur reçu par chaque moyen de réception de poste primaire au cours de la transmission à partir de chaque poste distant ;

b) calculer (612) une puissance de signal ajustée pour chaque zone en ajustant la puissance de signal mesurée pour chaque moyen de réception de poste primaire en faisant correspondre des facteurs prédéterminés associés à la zone et en combinant les puissances de signal ajustées pour chaque poste distant; et

c) en établissant une sélection dynamique (614) pour chaque poste distant de la zone ayant la plus grande puissance de signal ajustée au cours de la dernière transmission à partir de ce même poste distant.

2. Procédé selon la revendication 1 dans lequel ledit poste primaire comprend en outre une pluralité de moyens de transmission (114, 120, 124) destinés à transmettre des signaux de message modulés sur un signal porteur différent du signal porteur du moyen de réception de poste primaire, et lesdits postes distants comprennent en outre un moyen de réception (341) destiné à recevoir des signaux de message modulés sur le signal porteur du moyen de transmission du poste primaire, ledit procédé étant en outre caractérisé par l'étape consistant à d) sélectionner (706), dans le but de communiquer avec un poste distant sélectionné, le moyen de transmission du poste primaire couvrant la zone qui avait la plus grande puissance de signal ajustée au cours de la dernière transmission à partir du poste distant sélectionné.

3. Procédé selon la revendication 2, caractérisé en outre par l'étape consistant à e) stocker (612) un signal d'indication indiquant quelle zone avait la plus grande puissance de signal ajustée au cours de la dernière transmission à partir du poste distant sélectionné.

4. Procédé selon la revendication 3, dans lequel ledit poste distant sélectionné transmet un signal d'accusé de réception modulé sur le second signal porteur en réponse à la réception d'un signal de message à partir dudit moyen de contrôle de poste primaire, ledit procédé étant en outre caractérisé par les étapes consistant à :

f) moduler (714) un signal de message sur le premier signal porteur du moyen de transmission de poste primaire sélectionné à l'étape d) ;

g) moduler (716, 718, 714) le signal de message sur le premier signal porteur du moyen de transmission de poste primaire couvrant la zone indiquée par le signal d'indication stocké si le signal d'accusé de réception n'est pas reçu par au moins un des moyens de réception de poste primaire dans un intervalle de temps prédéterminé après que le signal de message ait été transmis à l'étape f).

5. Procédé selon la revendication 2, caractérisé en outre par l'étape consistant à e) moduler (714) un signal de message sur le signal porteur du moyen de transmission de poste primaire sélectionné à l'étape d).

6. Procédé selon la revendication 5 caractérisé en outre par l'étape consistant à f) déconnecter (714) ceux des autres moyens de transmission de poste primaire dont le premier signal porteur modulé interfère avec la réception de signaux dans la zone ayant la plus grande puissance de signal ajustée au cours de la dernière transmission à partir du poste distant sélectionné.

7. Procédé selon la revendication 2, caractérisé en outre par les étapes consistant à :

e) répéter les étapes a) et b) pour un second poste distant sélectionné ;

f) sélectionner (706, 708) un des moyens de transmission à partir desdits autres moyens de transmission de poste primaire qui n'interfère pas avec la zone qui avait la plus grande puissance de signal ajustée au cours de la dernière transmission à partir du premier poste distant sélectionné et qui couvre la zone ayant la plus grande puissance de signal ajustée au cours de la dernière transmission à partir du second poste distant sélectionné ; et

g) moduler (714) un signal de message sur le signal porteur du moyen de transmission de poste primaire sélectionné à l'étape e).

8. Procédé selon la revendication 2, caractérisé en outre par les étapes consistant à :

e) détecter (708) le moyen de transmission de poste primaire qui interfère avec la réception dans la zone qui avait la plus grande puissance de signal ajustée au cours de la dernière transmission à partir du poste distant sélectionné ; et

f) moduler (714) un signal de message sur le premier signal porteur du moyen de transmission de poste primaire sélectionné à l'étape d) si aucun moyen de transmission de poste primaire interférant n'est détecté.

9. Procédé selon la revendication 1 ou 2, dans lequel ladite étape a) est en outre caractérisée par les étapes consistant à :

i) stocker (604) les puissances de signal mesurées pour chaque moyen de réception de poste primaire ;

ii) réduire (612) les puissances de signal mesurées précédemment stockées pour chaque moyen de réception de poste primaire au cours d'une précédente transmission à partir du même poste distant d'une quantité liée à l'intervalle de temps entre la transmission précédente et la transmission présente ; et

iii) faire la moyenne (612) entre les puissances de signal mesurées et les puissances de signal mesurées précédemment stockées réduites.

10. Moyen de contrôle pour poste primaire (104, 106, 108, 110, 112) d'un système de communication destiné à communiquer des signaux de message par l'intermédiaire d'un media de communication entre le poste primaire et une pluralité de postes distants (130, 132, 134) situés n'importe où dans un secteur géographique qui est divisé en une pluralité de zones, ledit poste primaire comprenant en outre une pluralité de moyens de transmission (114, 120, 124) destinés à transmettre des signaux de message modulés sur un premier signal porteur et une pluralité de signaux de réception (116, 118, 122, 126, 128) destinés à recevoir des signaux de message modulés sur un second signal porteur, chaque zone étant couverte par au moins un moyen de transmission et couverte par au moins un moyen de réception, et lesdits postes distants comprenant un moyen de transmission (343) destiné à transmettre des signaux de message modulés sur le second signal porteur et un moyen de réception (341) destiné à recevoir des signaux de message modulés sur le premier signal porteur ; ledit moyen de contrôle étant caractérisé par:

le moyen (412, 402) de mesure de la puissance de signal du signal porteur reçu par chaque moyen de réception de poste primaire au cours de chaque transmission à partir de chaque poste distant ;

le moyen (500) de calcul d'une puissance de signal ajustée pour chaque zone en ajustant la puissance de signal mesurée pour chaque moyen de réception de poste primaire en faisant correspondre des facteurs prédéterminés associés à la zone et en combinant les puissances de signal ajustées pour chaque poste distant ; et

le moyen (500) d'établir une sélection dynamique pour chaque poste distant de la zone qui avait la plus grande puissance de signal ajustée au cours de la dernière transmission à partir de ce poste distant.

11. Moyen de contrôle selon la revendication 10, caractérisé en outre par le moyen (500) de stocker un signal d'indication indiquant quelle zone avait la plus grande puissance de signal au cours de la dernière transmission à partir de chaque poste distant.

12. Moyen de contrôle selon la revendication 10 ou 11, caractérisé en outre par le moyen (500) de sélection, dans le but de communiquer avec un poste distant sélectionné, du moyen de transmission de poste primaire couvrant la zone qui avait la plus grande puissance de signal ajustée au cours de la dernière transmission à partir du poste distant sélectionné.

13. Moyen de contrôle selon la revendication 11 dans lequel chaque poste distant comprend un moyen (320) de génération d'un signal d'accusé de réception en réponse à la réception d'un signal de message à partir dudit moyen de contrôle et des moyens (318, 343) de modulation du signal d'accusé de réception sur le second signal porteur de son moyen de transmission, ledit moyen de contrôle étant en outre caractérisé par :

le moyen (500) de sélection, dans le but de communiquer avec un poste distant sélectionné, du moyen de transmission de poste primaire couvrant la zone qui avait la plus grande puissance de signal ajustée au cours de la dernière transmission à partir du poste distant sélectionné ; et

les moyens (406, 402) de modulation d'un premier signal de message sur le premier signal porteur du moyen de transmission de poste primaire sélectionné, ledit moyen de contrôle permettant audit moyen de modulation (406, 402) de moduler un second signal de message sur le premier signal porteur du moyen de transmission de poste primaire couvrant la zone indiquée par le signal d'indication stocké si le signal d'accusé de réception n'est pas reçu par au moins l'un des moyens de réception de poste primaire dans un intervalle de temps prédéterminé après que le premier signal de message ait été transmis.

*Fig. 1*

19

*Fig. 2*

Fig. 3

EP 0 179 283 B1

SERIAL DATA SIGNALS ——3—→ **RS232 INTERFACE** 404 ——2—→

TRANSMITTER INPUT SIGNAL ←—— **FILTER** 406

RECEIVER OUTPUT SIGNAL —→ **FILTER** 408 —→ **LIMITER** 410 —→

**MICROCOMPUTER** 402 CLK I/O

SSI SIGNAL —→ **A/D CONVERTER** 412 —8, DIGITIZED SSI—→

*Fig. 4*

TO HOST VIA MODEM ——3——→ **RS232 INTERFACE** 502 ——2——→ **MICROCOMPUTER** 500 CLK

——2—→ **RS232 INTERFACE** 504 ——3——o

——2—→ **RS232 INTERFACE** 505 ——3——o

TO CCM'S VIA MODEMS

——2—→ **RS232 INTERFACE** 506 ——3——o

*Fig. 5*

22

*Fig. 6*

START — 600

SET MESSAGE
TIMER=100MS — 602

STORE SSI
IN SSI MATRIX
FOR RECEIVER — 604

NEW
SSI DATA
RECEIVED
? — 606   YES

NO

DECREMENT MESSAGE
TIMER ONCE EVERY
MS. — 608

NO   MESSAGE
TIMER=0
? — 610

YES

COMPUTE ADJUSTED
SIGNAL STRENGTH FOR
EACH ZONE — 612
$[ZADJ] = [SSI] \times [ZSEL]$

SELECT ZONE
HAVING LARGEST
ZADJ AND STORE
ZONE IN Z(1) FOR PT — 614

SELECT ZONE
HAVING SECOND
LARGEST ZADJ AND
STORE ZONE IN Z(2) FOR PT — 616

EXIT — 618

*700* START

702 SET N=1

704 SET M=1

706 SELECT TRANSMITTER COVERING Z(N) FOR PT

708 INTERFERING TRANSMITTER IN USE ?

YES → 710 QUE MESSAGE FOR LATER TRANSMISSION → 712 EXIT

NO → 714 TRANSMIT MESSAGE TO PT USING SELECTED TRANSMITTER

716 WAIT 100MS FOR ACK

718 ACK RECEIVED ? YES → 720 EXIT

NO → 722 M=M+1

724 M ≥ 3 ? NO

YES → 726 N=N+1

728 N ≥ 5 ? YES → 730 ALERT HOST THAT PT IS INACTIVE OR LOST → 732 EXIT

NO

*Fig. 7*

24

Fig. 8

*Fig. 9*